# EUROPEAN PATENT APPLICATION

(11) **EP 3 782 496 A1**
(43) Date of publication of application: **24.02.2021**
(21) Application number: 20176959.3
(22) Date of filing: 27.05.2020
(51) Int. Cl.: A43B 13/04, A43B 13/12, A43B 13/14, A43B 13/16, A43B 13/22, B29D 35/00, B29D 35/12, A43B 13/18

(54) **FOOTWEAR WITH MECHANICAL CUSHIONING SOLE**

(30) Priority: 22.08.2019 US 201916548413
(71) Applicant: Wolverine Outdoors, Inc., Rockford, MI 49351 (US)
(72) Inventor: CASS, William J., Belmont, Michigan 49306 (US); WORKMAN, Steven A., Grand Rapids, Michigan 49503 (US); MATIS, Clark A., Durango, Colarado 81301 (US)
(74) Representative: Haseltine Lake Kempner LLP

(57) **Abstract**

A sole assembly for footwear includes a base plate and at least two sole pods disposed adjacent one another but spaced apart by a gap. The sole pods define respective apertures that form an integral truss in each. The apertures can be aligned and parallel with one another and/or a longitudinal axis of the base plate and sole assembly. The truss system of the respective pods can independently deform to provide underfoot cushioning, but also can conform around and absorb underfoot terrain features. A method of manufacturing the sole assembly can include forming the sole pods adjacent one another in a planar configuration, rotating each of the sole pods to an upright configuration and joining those sole pods to one another but separating them from one another with a gap.

## Description

### BACKGROUND OF THE INVENTION

The present invention relates to footwear, and more particularly to footwear having a sole assembly with a mechanical cushioning system.

There are many different types of footwear that serve different functions. Some footwear are designed for rigorous outdoor activity. This footwear can include heavy duty structural uppers and soles configured to withstand extensive engagement with an outdoor environment. Many times, the soles of such footwear are designed to provide extreme traction on natural terrain features, such as soil, rocks and mud. Such soles also typically are outfitted with foam midsoles that provide cushioning above the outsole.

Some manufacturers enhance the traction of outsoles by varying tread shape and lug patterns. When an outsole may be used in rugged but soft terrain, it might be designed with deep treads that penetrate into the ground to provide bite. For slightly harder terrain having rocks, an outsole might be designed with shallower but stickier treads spaced in a particular pattern. Yet other outsoles for muddier terrain might be designed with a more open lug pattern to allow the mud to separate from the outsole and not build up on it.

While there are many different tread types and lug patterns, most are designed to simply penetrate into a terrain feature, like the ground, so that the tread or lug engages more material and is less prone to slip or move due to that enhanced surface area engagement with the terrain feature. While this is helpful, it does not always result in superior traction and prevent unwanted slippage or movement relative to the ground.

Further, most midsoles are constructed from foam as noted above. These midsoles can provide cushion to the wearer, but many times they are rendered inflexible and unable to conform to underfoot features because they are bound along the length of the footwear with the outsole. Again, where the outsole is rigid with a traction enhancing tread, this can reduce the flexibility of the outsole as well as the overlying midsole, which in turn results in the footwear being relatively inflexible, which can compromise traction.

Accordingly, there remains room for improvement in the field of cushioned traction elements to enhance engagement of footwear with terrain features.

### SUMMARY OF THE INVENTION

Footwear is provided including a sole assembly having multiple adjacent sole pods, separated by respective gaps that extend from a base plate to the ground, with each sole pod having an integral truss configured to allow the pod to independently provide cushion and/or absorb underfoot objects.

In one embodiment, the sole assembly can include a base plate extending longitudinally from a forefoot toward a heel, the base plate including a longitudinal axis. The base plate can be rigid yet somewhat flexible. A first sole pod can be attached to the underside of the base plate, and can extend downward independently, in a freestanding, cantilevered manner from the base plate. The first pod can include a first forward surface, a first rearward surface and a ground contacting surface. The pod can define multiple first apertures extending through it, from the first front surface to the first rear surface, above the ground contacting surface, to form an integral truss in the pod. The apertures can each be parallel to the longitudinal axis.

In another embodiment, the sole assembly can include a second sole pod also attached to the underside of the base, extending downward independently, in a freestanding, cantilevered manner from the base plate, adjacent the first sole pod. The second sole pod can be similar to the first sole pod, including second apertures and forming a second integral truss, as well as a second forward surface and a second rearward surface. The second sole pod can be closer to the heel region than the first sole pod.

In still another embodiment, the first rearward surface of the first sole pod can separated from the second forward surface of the second sole pod by a first gap that extends upwardly from the first ground contacting surface and the second ground contacting surface to the base plate. The first and second sole pods can be commonly attached to the base plate, but each can be separately and independently compressible in an upward extending or vertical plane that is generally perpendicular to the base plate. Each of the sole pods also can be separated from one another across the entire width of the base plate.

In yet another embodiment, the first sole pod and the second sole pod can be independently compressible whereby an underfoot feature, such as an element of the ground or other terrain feature, can be absorbed into at least one of the first sole pod and the second sole pod.

In even another embodiment, the sole assembly can include a third sole pod and a toe sole pod, similar to the first and second sole pods. The third pod can be disposed adjacent the second pod, but closer to the heel region than the second pod. The third pod can be separated from the second pod via a second gap. The toe sole pod can be separated from the first pod via a third gap, with the toe sole pod being closer to a toe portion of the sole assembly than the first pod, and the farthest of the first, second and third pods from the heel region. Each of the respective pods can be independently compressible and can optionally include their own integral truss.

In a further embodiment, the first apertures in the first sole pod can be aligned with the second apertures in the second sole pod. In some cases, one or more of the apertures can define aperture axes. These aperture axes can be substantially parallel to the longitudinal axis of the sole assembly. In other cases, the aperture axes of the first pod can be substantially parallel to the aperture axes of the second pod. Indeed, some of the apertures of the first pod in the second pod can align perfectly, such that the axes are coincident with one another.

In still a further embodiment, the forward and rearward surfaces of adjacent sole pods can be planar. These planar surfaces also can be substantially parallel to one another, extending generally vertically downward from the base plate.

In yet a further embodiment, where a first aperture of the first sole pod is aligned with a second aperture of the second sole pod, a third sole pod can be viewed through the apertures, along a line extending through the first apertures and the second apertures, optionally parallel to the longitudinal axis.

In even a further embodiment, the first sole pod can include an outsole portion, such as a first outsole tread including the first ground contacting surface, and the second sole pod can include a second outsole tread including the second ground contacting surface. The first outsole tread can include a first cut portion facing toward the second outsole tread, and the second outsole tread can include a second cut portion facing toward the first outsole tread. The first cut portion and the second cut portion can be remnants of a removed tread portion that previously extended between the first cut portion and the second cut portion, below the base plate. By trimming out the removed tread portion from the sole assembly, the first and second sole pods can be rendered independent and free from one another, extending in a cantilevered manner downward from the base plate. Of course, in some cases, the cut portions may not be necessarily be trimmed or cut. Instead, the outsole tread of the first and second pods can be molded and/or otherwise attached directly to the undersides of the respective sole pods, without extending from one sole pod to the next at any point in manufacture or assembly of the sole assembly.

In another, further embodiment, the first truss of the first sole pod be placed in or disposed in a first plane, and the second truss of the second sole pod can be placed in or disposed in a second plane, with the first plane in front of the second plane. The first plane and second plane can be separated by first gap there between. The respective first and second apertures of the first truss and the second truss can be substantially aligned and parallel with one another and the longitudinal axis, while the respective first and second planes can be substantially perpendicular to the longitudinal axis.

In still another, further embodiment, the front and rear faces of each of the adjacent sole pods can be adjacent one another with a gap between the faces of the respective adjacent sole pods. The gap can be in fluid communication with apertures defined in each of the sole pods facing the respective gap, as well as an underfoot surface when the sole assembly is resting on that surface.

In yet another, further embodiment, a method of manufacturing a sole assembly for footwear is provided. The method can include introducing a viscous material into a first sole pod cavity including pins extending from a first mold surface; introducing the viscous material into a second sole pod cavity including pins extending from a second mold surface; allowing the viscous material to cure so that a first sole pod and second sole pod are formed in the respective cavities; removing the first sole pod from the first sole pod cavity such that the pins are removed from the first sole pod to form multiple first apertures that extend from a first rearward surface to a first forward surface of the first sole pod; removing the second sole pod from the second sole pod cavity such that the pins are removed from the second sole pod to form multiple second apertures that extend from a second rearward surface to a second forward surface of the second sole pod; and placing the first sole pod adjacent the second sole pod such that a gap is between the first rearward surface and the second forward surface, such that the first and second apertures substantially align with a longitudinal axis of the sole assembly.

In even another, further embodiment, the first sole pod includes a first truss in the second sole pod includes a second truss, that lay in a common plane when the pods are in the respective mold cavities. However, during placement of the sole pods, the first truss is placed in a first plane and the second truss is placed in a second plane. The first plane and the second plane are separated by at least the first gap and substantially parallel with one another. The first plane and the second plane do not lay in the common plane in this configuration.

In another embodiment, the method can include forming multiple sole pods in individual sole pod cavities in a mold. The multiple sole pods can be formed in a flat orientation laying adjacent one another and optionally laying in a generally horizontal configuration. The sole pods can be removed from the mold and rotated upward about respective axes to a substantially vertical configuration. The sole pods can then be placed adjacent one another across the respective gaps between the pods. The sole pods can be joined with the base plate in this vertical configuration.

In still another embodiment, the method can include forming first apertures in a first sole pod, the apertures including a first aperture axis, forming second apertures in a second sole pod, the apertures including a second aperture axis, where the first aperture axis is offset from the second aperture axis by at least 25 mm before the first and second sole pods are removed from the mold cavities, wherein the first and second aperture axes are offset less than 25 mm after the sole pods are placed in position adjacent one another, readied for joining to the base plate.

In yet another embodiment, the sole assembly can include first and second sole pods, arranged one in front of the other, with one of the sole pods closer to the heel than the other. Each of the sole pods can be integrally formed with a base plate, but can extend independently and in a cantilevered manner downward from the base plate.

In even another embodiment, the first and second sole pods can include respective first and second apertures that form respective first and second integral trusses. These trusses however can be arranged in a horizontal manner, rather than in a vertical manner as with the trusses in the embodiments above. The first and second apertures can extend downward from an upper surface of the base plate and through the base plate into each of the respective sole pods. The first and second apertures can extend generally vertically through the base plate and the respective sole pods. The trusses of the respective pods can lay in a common horizontal plane.

In a further embodiment, the first and second sole pods can be separated by a gap that extends upwardly from a ground contacting surface of each of the sole pods to a gap top surface, which can correspond to a lower surface of a gap spacer block between the sole pods. The first and/or second apertures can extend downward to respective bottom walls and their bottom wall surfaces. The gap top surface can be disposed a distance above the bottom wall surfaces of the respective first and/or second apertures. The bottom wall surfaces of the respective first and/or second apertures can be disposed below the gap top surface.

The footwear of the current embodiments provides a sole assembly having a mechanical cushioning system, with the ability to conform to underfoot objects and terrain features, thereby substantially increasing traction. The sole assembly can provide exceptional traction due not only to the property of the materials utilized, but also due to the geometry of its components. Where the sole assembly includes segmented pods having buttressed elements or trusses, the sole assembly can resist the impact of the sole with the ground, as well as conform around an underfoot object or terrain feature. A rock thus is not merely an obstacle to resist with traction between the two surfaces, it is absorbed by the sole assembly, which provides more surface contact, better traction and more flexibility. The system can be tuned for specific traction and cushioning solutions. Where the segmented pods have an open geometry, different inserts can be selectively utilized in the geometry to alter traction and cushioning. In some cases, the segmented pods of the sole assembly can be molded and assembled in a unique way. For example, the pods can be molded on their sides and in a multiple array, similar to a tray of cookies or muffins, which can facilitate the use of molding operations that easily define the open geometry of the pods, typically not feasible in traditional constructions.

These and other objects, advantages, and features of the invention will be more fully understood and appreciated by reference to the description of the current embodiment and the drawings.

Before the embodiments of the invention are explained in detail, it is to be understood that the invention is not limited to the details of operation or to the details of construction and the arrangement of the components set forth in the following description or illustrated in the drawings. The invention may be implemented in various other embodiments and of being practiced or being carried out in alternative ways not expressly disclosed herein. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof. Further, enumeration may be used in the description of various embodiments. Unless otherwise expressly stated, the use of enumeration should not be construed as limiting the invention to any specific order or number of components. Nor should the use of enumeration be construed as excluding from the scope of the invention any additional steps or components that might be combined with or into the enumerated steps or components.

### BRIEF DESCRIPTION OF THE DRAWINGS

Fig. 1 is a side view of footwear of a current embodiment illustrating multiple sole pods of a sole assembly, the sole pods independently extending in a cantilevered manner from the bottom of a base plate of the sole assembly;
Fig. 2 is a bottom view of the footwear illustrating multiple independent sole pods;
Fig. 3 is an exploded view of the footwear;
Fig. 4 is a perspective view of an independent sole pod including a truss and engaging and absorbing an underfoot terrain feature to provide enhanced traction and cushioning;
Fig. 5 is a top view of a mold including multiple sole pod mold cavities laying in a common plane;
Fig. 6 is a flowchart illustrating a method of manufacturing a sole assembly of the current embodiment;
Fig. 7 is a side view of footwear of a first alternative embodiment of the footwear illustrating multiple sole pods of a sole assembly, the sole pods independently extending in a cantilevered manner from the bottom of the base plate of the sole assembly;
Fig. 8 is a top view of the sole assembly showing sole pods with multiple integral trusses;
Fig. 9 is a section view of the sole assembly illustrating multiple apertures of trusses of adjacent, independent cantilevered sole pods taken along lines IX-IX of Fig. 8; and
Fig. 10 is another section view of the sole assembly illustrating multiple apertures of trusses of adjacent, independent cantilevered sole pods taken along lines X-X of Fig. 8.

### DESCRIPTION OF THE CURRENT EMBODIMENTS

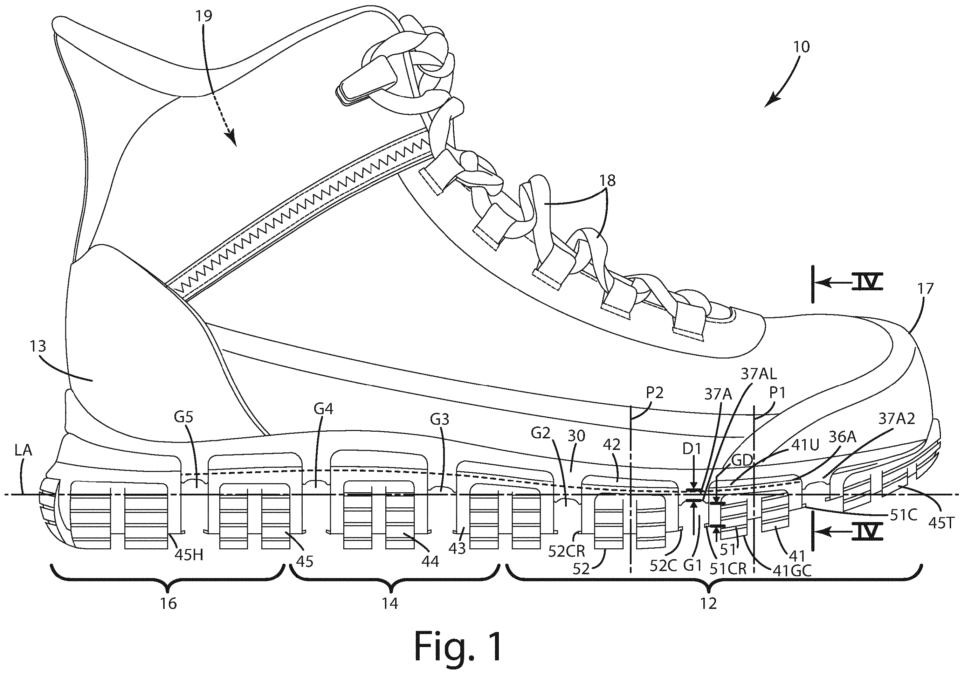

A current embodiment of the footwear is illustrated in Figs. 1-4, and generally designated 10. In these embodiments, the improved article of footwear includes a sole assembly 20 including multiple independent sole pods 41, 42, 43, 44, 45, 45H and 45T, configured to independently engage underfoot ground and/or terrain features and provide improved traction and cushioning.

Although the current embodiments are illustrated in the context of a hiking boot, they may be incorporated into any type or style of footwear, including performance shoes, trail shoes and boots, work boots, all-terrain shoes, running shoes, athletic shoes, running shoes, sneakers, conventional tennis shoes, walking shoes, multisport footwear, casual shoes, dress shoes or any other type of footwear or footwear components. Generally, the shoe is well suited for rough uneven terrain having a variety of different types of underfoot features that may engage the footwear. The sole assembly herein can provide a base plate and attached sole pods that operate in concert to provide a stable footing but that includes multiple independent pods that can independently deform and absorb underfoot features. This can provide reactive and dynamic traction to the sole assembly and footwear, thus enabling the wearer to have confidence in their footing, even on very uneven and unstable surfaces.

It also should be noted that directional terms, such as "vertical," "horizontal," "top," "bottom," "upper," "lower," "inner," "inwardly," "outer" and "outwardly," are used to assist in describing the invention based on the orientation of the embodiments shown in the illustrations. Further, the terms "medial," "lateral" and "longitudinal" are used in the manner commonly used in connection with footwear. For example, when used in referring to a side of the shoe, the term "medial" refers to the inward side (that is, the side facing the other shoe) and "lateral" refers to the outward side. When used in referring to a direction, the term "longitudinal direction" refers to a direction generally extending along the length of the shoe between toe and heel, and the term "lateral direction" refers to a direction generally extending across the width of the shoe between the medial and lateral sides of the shoe. The use of directional terms should not be interpreted to limit the invention to any specific orientation. Further, as used herein, the term "arch region" (or arch or midfoot) refers generally to the portion of the footwear or sole assembly corresponding to the arch or midfoot of the wearer's foot; the term "forefoot region" (or forefoot) refers generally to the portion of the footwear forward of the arch region corresponding to the forefoot (for example, including the ball and the toes) of a wearer's foot; and the term "heel region" (or heel) refers generally to that portion of the footwear rearward of the arch region corresponding to the heel of the wearer's foot. The forefoot region 12, arch region or mid-foot region 14, and heel region 16 generally are identified in Fig. 1. However, it is to be understood that delineation of these regions may vary depending upon the configuration of the sole assembly and/or footwear.

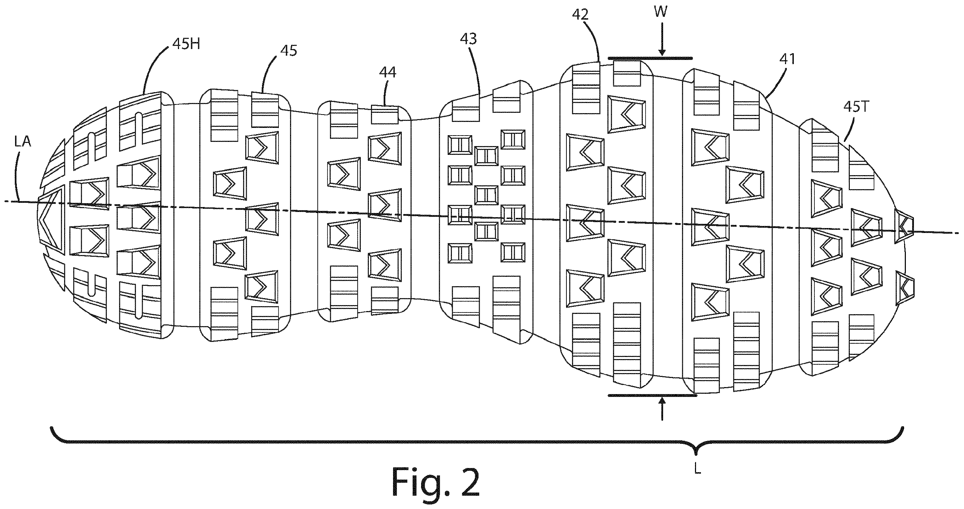

With reference to Figs. 1-2, the footwear 10 can include a sole assembly 20. The sole assembly 20 can include a base plate 30, sole pods 40, and an outsole 50, also referred to as an outsole tread herein. The lowermost or ground contacting surfaces, on the bottoms of the sole pods or outsole tread, can include multiple lugs, treads, spikes, cleats and/or other features designed to enhance traction between the footwear and an underlying surface. More or fewer elements of the sole assembly 20 can be included in some embodiments. For example, some embodiments can exclude the base plate and/or the outsole, in which case the sole pods can be joined with another structure or the upper itself. The sole pods themselves can be constructed to include a cushioning upper portion and a firmer, wear resistant bottom portion that is formed by the outsole. The components of the sole assembly can individually and/or collectively provide the article of footwear 10 with a number of attributes, such as support, rigidity, flexibility, stability, cushioning, comfort, reduced weight, and/or other attributes. Generally, regardless of which components are present, the sole assembly 20 can form the bottommost portion of the footwear 10. The sole assembly 20 can include a side-to-side width W, a heel-to-toe longitudinal length L and a longitudinal axis LA, which can be shared with the footwear, sole assembly, base plate and/or outsole, as illustrated in Fig. 2.

The footwear 10 can include a textile upper 17 joined with the sole assembly 20. The upper 17 can be formed from a variety of material elements joined together to cover at least a portion of the wearer's foot. The material elements can be selected based on the intended uses of the article of footwear 10, and can include synthetic textiles, mesh textiles, polymers or leather, for example. The upper 17 can be constructed to improve the rigidity of the base plate 30 and the sole assembly 20. For example, the upper can be constructed from leather, plastic, canvas or other materials. The upper 17 can include one or more closure elements, including for example shoelaces 18. The upper 17 additionally includes an upper opening 19 for receiving the wearer's foot and a lower periphery 13 for attachment to the sole assembly 20.

A footbed (not shown) can be positioned within the void defined by the upper and can be non-stretchable and lightweight and joined to the upper to provide a void for receipt of the wearer's foot. The footbed can be constructed from a sheet of material, such as foam, EVA, PU, latex, gel or other materials, and by virtue of its compressibility, provide cushioning, and may also conform to the foot in order to provide comfort, support, and stability. The lower peripheral allowance or edge of the upper can be stitched, cemented, or otherwise fastened to the footbed around the perimeter of the footbed. The sole assembly 20 can be combined with any other type or style of upper construction capable of being suitably joined with the outsole 50, for example a Strobel construction. The joining of the sole assembly/outsole and the upper can be accomplished using adhesives, cement, injection molding, pour molding or any other technique used to join an upper and sole assembly.

With reference to Figs. 1, 3 and 4, the upper 17 can be joined directly with the base plate 30, in particular the upper surface 31 of the base plate 30. The base plate 30 can extend from the forefoot region 12 to the heel region 16. The base plate can extend across the width W and along the entire length L of the footwear. The base plate 30 can include a longitudinal axis shown LA in Fig. 2. The base plate 30 can include a lower or undersurface 32 opposite the upper surface 31. The upper surface 31 can include a slight indentation or recess 31R within which the upper 17 can be positioned. This recess 31R can be bounded by a wall 31W, which can extend part way up a portion of the exterior surface of the upper 17, adjacent the lower portion 13 of the upper 17.

The lower surface 32 of the base plate 30 can include multiple sole pod recesses 36A, 36B, 36C. Each of these recesses can be bounded by a gap spacer block 37A, 37B, 37C, etc. These gap spacer blocks can be configured to fit between and partially space the sole pods as described below. These gap spacer blocks optionally can be the same width as the gaps G1, G2 and G3. For example, the gap G1 can be of a width W1 which corresponds to the width of spacer block 37A. The gap G2 can be of a width W2 which corresponds to the width of the spacer block 37B. The gap G3 can be of a width W3 which corresponds to the width of the spacer block 37C.

The sole assembly 40 can include multiple sole pods 45T, 41, 42, 43, 44, 45 and 45H that extend from the toe of the footwear to the heel of the footwear, generally passing through the forefoot region 12, arch region 14 and heel region 16. These sole pods can be separated by respective gaps, for example, gap G1, G2, G3, G4 and G5 respectively. Each of the respective sole pods can operate to provide some level of cushioning to the footwear. The sole pods can be collectively referred to as a midsole, even though the pods themselves are independent and individually constructed, and also separately compress and react independent of one another as described below.

Each of the sole pods can be positioned below the base plate 30, and can be constructed from a material having a density that is generally less than the density of the outsole 50 and the base plate 50. For example, the sole pods can be constructed from ethyl vinyl acetate (EVA), polyurethane (PU), latex, foam, a gel or other materials. Generally, the density of each individual sole pod can be such that it compresses relatively easily to provide cushion to the wearer's foot, for example, the heel and/or the forefoot. The midsole material can have a durometer, optionally about 30 Asker C to about 65 Asker C, further optionally about 42 Asker C to about 48 Asker C, and even further optionally about 45 Asker C or about 43 Asker C. In general, harder materials have more wear resistance, but they are also less flexible. Conversely, softer materials possess less wear resistance, but are more flexible.

The outsole 50 can be joined in segments or individual outsole treads 51T, 51, 52, 53, 54, 55 and 55H. Each of the individual outsole treads can be joined with the bottoms of respective sole pods as described below. Each outsole tread can include multiple lugs and/or treads that extend downward, or optionally can be relatively featureless, forming a smooth surface. Where present, the lugs and treads can be arranged as desired, and not necessarily in a repeating pattern. The lugs and treads can include one or more geometric shapes. The outsole tread can be constructed from one or more materials, for example, natural or synthetic rubber, thermoplastic polyurethane elastomers (TPU), nylon, polymer blends, wear resistant polymers, elastomers and/or other materials. Other materials, such as fiber-reinforced polymers can be used, which can include epoxy, polyethylene or thermosetting plastic reinforced with carbon, glass and/or aramid fibers for enhanced protection. The outsole material can have a durometer, optionally about 40 Shore A to about 70 Shore A, further optionally about 68 Shore A to 72 Shore A.

With reference to Figs. 1, 3 and 4, the sole pods 40 will now be described in further detail. As illustrated, there can be one, two, three, four or more sole pods included in the sole assembly 20. These sole pods can include a first sole pod 41, a second sole pod 42, a third full sole pod 43, a fourth sole pod 44, a fifth sole pod 45, a sixth or heel sole pod 45H and a seventh or toe sole pod 41T. The sole pods can extend from the toes to the heel of the footwear, generally through the forefoot region to the heel region. These pods can be spaced in different portions of the footwear and can be constructed differently, having different lengths and widths. As illustrated, each of the pods can include similar features. Therefore only the first 41 and second 42 sole pods will be described in significant detail here. It will be understood that the other sole pods can have similar configurations, structure and spatial orientations relative to the other components of the sole assembly 40.

The first sole pod 41 can be disposed under the base plate 30, and as mentioned above can be glued, cemented or otherwise attached to that base plate. Optionally, the pod 41 can be located within a pod recess 36A. The first pod 41 can include a first length L1 that fits within and is slightly less than the length of the pod recess 36A. The first pod can include an upper surface 41U and a lower surface 41L. The upper surface 41U can attach to the base plate 30, within the pod recess 36A. As shown in Fig. 1, the upper surface 41U can be placed in the recess 36A between the gap spacer blocks 37A and 37A2. The upper surface 41U can be positioned above the lower surface 37AL of an adjacent gap spacer block 37A by a distance D1. This distance D1 can optionally be 0.1 mm-5 mm, inclusive, 0.5 mm-2 mm, inclusive, or about 1 mm. With this inset of the sole pod 41 between the gap spacer blocks 37A and 37A2, the sole pod 41 can be locked in place so that it does not move at its uppermost portion relative to the base plate. The recesses and gap spacer blocks can effectively set the widths W1, W2, W3, etc. of the gaps and thereby space the adjacent sole pods in a predetermined spacing relative to one another along the sole assembly.

Optionally, in some applications, the recesses and associated gap spacer blocks can be eliminated from the bottom of the base plate 30. In those cases, the bottom of the base place can be generally flat and featureless. The upper surfaces of the respective sole pods can be glued, cemented or otherwise attached to the planar surface. Without the spacer blocks and/or the associated pod recesses, the sole pods can be secured to the bottom of the base plate with a special template and/or external spacers positioned between the sole pods.

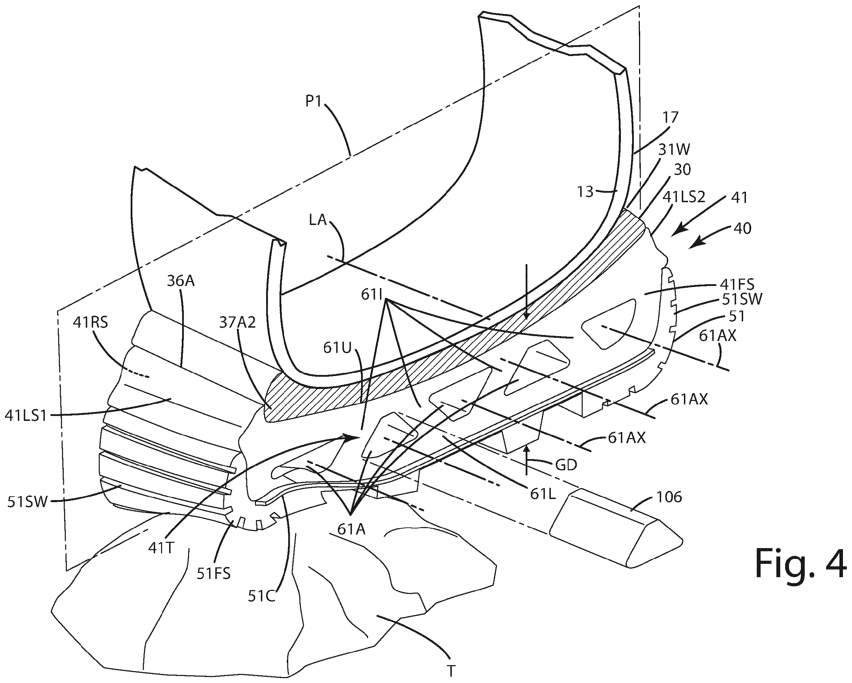

As shown in Figs. 1 and 4, the first sole pod 40 can include a first forward or front surface 41FS and a first rearward or rear surface 41RS. The first front surface can face forward, generally toward the toe. The first rear surface can face rearward, generally toward the heel. The first sole pod 41 can include a first lateral surface 41LS1 and a first medial surface 41LS2, generally disposed on opposite sides of the longitudinal axis LA of the sole assembly. As shown in Fig. 4, sidewalls 51SW of the outsole tread can extend upwardly adjacent and partially concealing the first lateral side wall and the first medial side wall. In some cases, these outsole sidewalls can entirely cover the lateral and medial surfaces of the pod, extending all the way to the base plate 30. Further, these lateral and medial surfaces can be closed, and void of any openings extending through those surfaces or the respective sidewalls of the sole pod with which they are associated. Optionally, the first forward surface and the first rearward surface can be parallel to one another. In some applications, these surfaces can be convex, concave or irregularly shaped such that they are not parallel to one another.

The first sole pod 41 can define a plurality of first apertures 61A. These apertures 61A can be substantially parallel, for example, 0 to 7 degrees, inclusive, offset to the longitudinal axis LA. For example, these apertures can each include an aperture axis 61AX. This aperture axis 61A can extend through the geometric center of each of the apertures. Where the apertures are irregularly shaped, the axis can extend generally through a center or other portion of the aperture, parallel to one or more of the sidewalls of the aperture. As illustrated in Fig. 4, each of the apertures 61A can be polygonal shaped, for example, the apertures can be in the form of polygonal tubes, bounded by the bottom wall, intermediate walls and/or an upper wall of the respective sole pod. Of course, in other embodiments, these apertures can be of other geometric configurations. For example, they can be elliptical, circular, rounded, regular or other shapes forming corresponding tubes through the respective sole pods, from a front surface to a rear surface, depending on the application.

The sole pod 41 can include a first upper wall 61U and a first lower wall 61L that are distal from one another. These upper and lower walls can be generally parallel to a lower surface or bottom 32 of the base plate 30. These upper and lower walls can be connected via the sidewalls 41LS1 and 41LS2. The first apertures 61A can be located between the first upper wall and the first lower wall. In addition, the sole pod can include multiple first intermediate wall members 611 that extend from the first upper wall to the first lower wall. These intermediate wall members can be aligned such that they are substantially parallel to the longitudinal axis LA. The respective first apertures 61A can be further located between the respective ones of the first intermediate wall members 611. Generally, each of the apertures can be bounded by one or more of the first upper wall, the first lower wall, the intermediate wall members and the side walls in the sole pod 41.

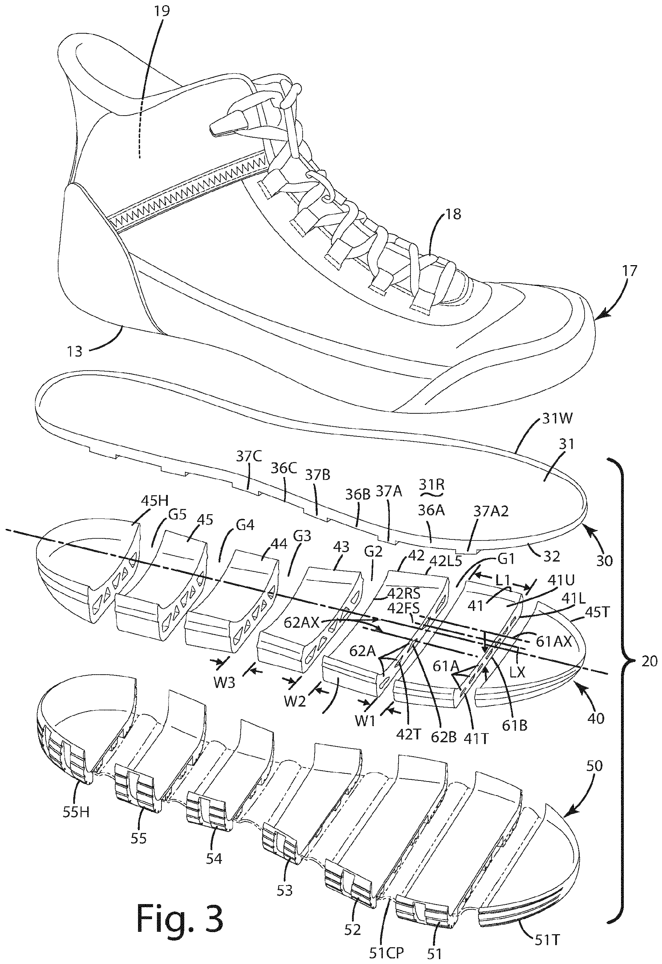

Optionally, with regard to the bottom wall, the outsole 50 can be joined directly to it, and one or more of the sidewalls 41LS1 and 41LS2 of the sole pod. Again, each individual sole pod can include its own individual and separate outsole tread. As shown in Fig. 4, the outsole tread 51 is secured to the bottom wall of the sole pod 41. As can be seen there, the first outsole tread 51 can include a first cut or trimmed portion 51C. This cut portion as shown protrudes a forward surface 51FS of the first outsole tread 51 and generally from the first front surface 41FS of the sole pod 41. This cut portion can illustrate the remnant or evidence of a previously included connecting tread portion 51CP. As shown in Fig. 3, previously included connecting tread portion 51CP is removed from the outsole 50 such that the individual outsole treads, for example 51 and 52 are separated from one another and not connected. This can enable the sole pods, for example sole pod 41 and 42 to compress, move and flex individually and independently of one another. Thus, the sole pods are not connected by an outsole that extends from toe to heel, but rather that outsole is provided in discrete segments, each segment being the respective outsole tread associated with the respective sole pods.

As shown in Fig. 1, the first sole pod 41 can include the first outsole tread 51 with forward first cut portion 51C and a rearward first cut portion 51CR, which is disposed on the rear surface of the sole pod. The first rearward cut portion 51CR can face toward a second outsole tread 52 on the second sole pod 42. The second outsole tread also can include a second forward cut portion 52CR facing toward the first outsole tread 51. The first cut portion and the second cut portion again can be previously joined via the removed, connecting tread portion 51CP (Fig. 3) which is below the base plate 30. Although the cut portions of the sole pods and the outsole portions thereof are shown as protruding slightly from the respective outsole treads, they may be perfectly flush with the forward and rearward surfaces of those outsole treads. This is so that they are not readily visible to a viewer, to provide a clean appearance. Further, although referred to as cut portions, these portions can be removed in other manners, such as by hot melting the outsole to remove the connecting tread portion 51CP. In other cases, the outsole treads 51, 52, 53, 54, 55, 51T and 55H can be specially molded so that they are associated with each individual sole pod. In such a construction, the connecting portion is already deleted from the outsole 50 without having to be cut in a subsequent operation.

With further reference to Fig. 4, the intermediate walls between the respective first apertures can form a first truss 41T, which can be an integral truss within the sole pod 41. This truss 41T can be within a first plane PI, which can be substantially perpendicular to the aperture axes 61AX or the apertures 61A in general. This first plane P1 also can extend through the sole pod, generally bisecting it into a forward portion and a rearward portion, with the forward portion including the first front surface 41FS and the rearward portion generally including the first rear surface 41RS.

As mentioned above, the sole pods can be substantially similar to one another. In some cases, however, the sole pods can vary in width of the assembly. For example, as shown in Fig. 2, the sole pods 41 and 42 can extend the entire width W of the sole assembly. The other sole pods, for example, the third sole pod 43, fourth sole pod 44, fifth sole pod 45 and the toe and heel sole pods 41T and 45H can extend less than the entire width.

As shown in Figs. 1 and 3, the sole pods can be separated by one or more gaps G1, G2, G3, etc. Each of these gaps can extend upwardly from the lowermost part of the ground contacting surfaces of the respective adjacent sole pods to the base plate. For example, as shown in Fig. 1, the gap G1 can extend upward from the ground contacting surface 41GC of the sole pod 41, which also can form the lowermost part of the outsole tread 51, to the base plate 30. Where the base plate 30 includes a gap spacer block 37A, that gap G1 extends upward to the lower surface 37AL. The gap G1 however in this construction as shown does not extend upward, above the upper surface 41U of the sole pod 41, nor above the upper surface of the adjacent second sole pod 42. Where the lower surface of the base plate is smooth (not shown) the gap can extend upward to the upper surface 41U. Generally, however, there can be established a distance D1 between the upper surface 41U of the sole pod 41 and the uppermost portion of the gap G1, such that the gap depth GD is less than the height H1 of the sole pod 41.

Optionally, the gaps between the sole pods can have relationships with components of the sole pods. For example, the first apertures 61A and second apertures 62A can include respective bottoms. These bottoms can lay within a common plane that extends through the bottoms. This common plane can be interrupted by the gap G1 disposed between the first sole pod 41 and the second sole pod 42.

The respective sole pods can have a substantially similar construction including the respective front surface, rear surface, upper wall, bottom wall, sidewalls, truss structure, apertures and respective outsole treads. For example, the second pod 42 shown in Fig. 3 also can be disposed under the base plate and in a respective base plate recess. The second sole pod 42 can include a second front surface 42FS and a second rear surface 42RS as well as a second lateral surface 42LS and a second medial surface 42MS. The second sole pod 42 can define multiple second apertures 62A that can be substantially parallel to the longitudinal axis LA of the sole assembly 20. The second sole pod 42 can include a second lower ground contacting surface that is included in the second tread element 52, or some other component of the second sole pod. The second sole pod and the other sole pods also can be closer to the heel region than the first sole pod. Although not described in detail here, the other sole pods, for example, the third sole pod 43, also can have virtually identical structure, surfaces and apertures as the first 41 and second 42 sole pods.

With reference to Fig. 3, the second apertures 62A can extend through the sole pod 42. For example, the apertures 62A can extend through the second front surface 42FS which can be planar so as to define a second forward surface plane. The second apertures 62A can be configured so that they are substantially orthogonal to the second forward surface plane.

Optionally, where the first rear surface 41FR is planar to define a first rearward surface plane, the apertures 61A of that sole pod also can be substantially orthogonal to that first rear surface plane. In some cases, the second apertures 62A can be orthogonal to the first rear surface plane 41RS of the first sole pod 41. The first apertures 61A can be orthogonal to the first front surface plane 42FS of the second sole pod 42. Further optionally, the rearward surfaces of one pod can be substantially planar and parallel to the forward surfaces of an adjacent pod. For example, the rearward and forward surfaces of the first pod 41 and the second pod 42 respectively can be planar and parallel to one another. The rearward and forward surfaces of the second 42 and third 43 pods can also be substantially planar and parallel to one another.

As shown in Fig. 3, the adjacent sole pods can be arranged such that the respective apertures align with a longitudinal axis LA. In some cases, the apertures also can have other relationships. For example, as mentioned above, the first apertures 61A of the first sole pod 41 can include respective axes 61AX. These axes optionally can be parallel to one another and optionally parallel to the longitudinal axis LA. The second apertures 62A can also define a plurality of axes 62AX. These axes 62AX optionally can be parallel to one another and parallel to the longitudinal axis LA.

Further, in some cases, the first apertures 61A and second apertures 62A can be aligned with one another. In some cases, these axes can be coincident with one another, while in other cases, these axes can be offset a distance from one another. Likewise, the respective apertures can be aligned with one another and/or offset from one another. For example, a first aperture 61A and a second aperture 62A can be aligned such that the third sole pod 43 or portions thereof can be viewed along a line LS, shown in Fig. 3, extending through a first aperture in the first sole pod 41 and a second aperture in the second sole pod 42. In the construction as illustrated, some of the first apertures 61A and their axes 61AX can be aligned with corresponding second apertures 62A and their axes 62AX, while other apertures of the first apertures 61A and the second apertures 62A can be offset from one another or otherwise misaligned with one another, as can be their respective axes.

As shown in Fig. 3, some of the first aperture axes 61AX can be offset relative to the second aperture axes 62AX of the adjacent sole pod. For example, some of the first aperture axes 61AX can be offset laterally, vertically up and/or vertically down from a second aperture axes 62AX, optionally by less than 25 mm, less than 20 mm, less than 15 mm, less than 10 mm, less than 5 mm, or between 0 mm and 25 mm. This offset distance can be measured between a first aperture axes and a second aperture axes in a plane that is orthogonal to the first aperture axes and the second aperture axes, for example a plane coming out of Fig. 1 in the gap G1.

Optionally, the sole pods can be configured to receive inserts 106 as shown in Fig. 4. These inserts can further fit within respective, selected apertures of any of the sole pods. Different inserts of different durometers can be selectively placed in selected apertures to custom tune the compressibility and cushioning of the sole pods and sole assembly in general.

When the article of footwear 10 is worn, the sole assembly 20 and its respective sole pods 40 can change when the footwear engages terrain features. For example, when the sole assembly 20 engages a terrain feature T, as shown in Fig. 4, an individual sole pod, such as the first sole pod 41, can deform and compress as shown there. A portion of the truss 41T can deform, with the respective apertures closing, and the bottom wall, sidewall and/or intermediate walls also deforming to change the shape of the respective apertures. Due to the forces of the weight of the wearer and the underfoot terrain, the terrain feature or underfoot feature can be absorbed into the sole pod, with the sole pod also providing cushioning in so doing. In turn, this can also provide improved traction between the sole pod and the underfoot terrain feature T. Of course, the independent sole pods can operate somewhat in concert when a larger underfoot feature is engaged by two or more of the sole pods. That terrain feature can be readily absorbed into those respective sole pods, while the sole pods provide enhanced traction on the feature. The sole pods can provide reactive and dynamic traction to the sole assembly and footwear, thus enabling the wearer to have confidence in their footing. Additionally, with their independent deformation capabilities, the sole pods can provide improved traction on uneven or unstable surfaces.

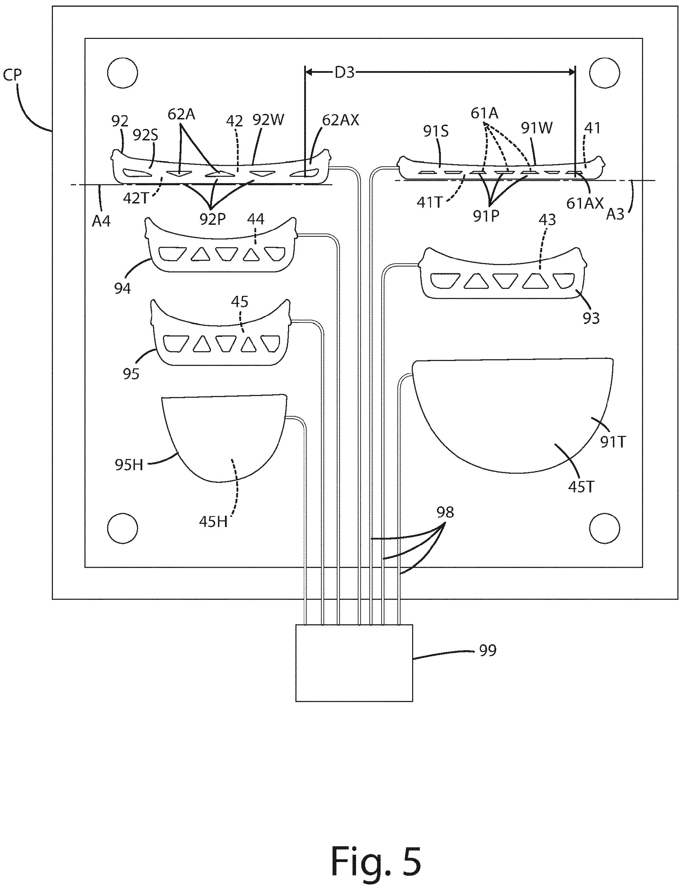

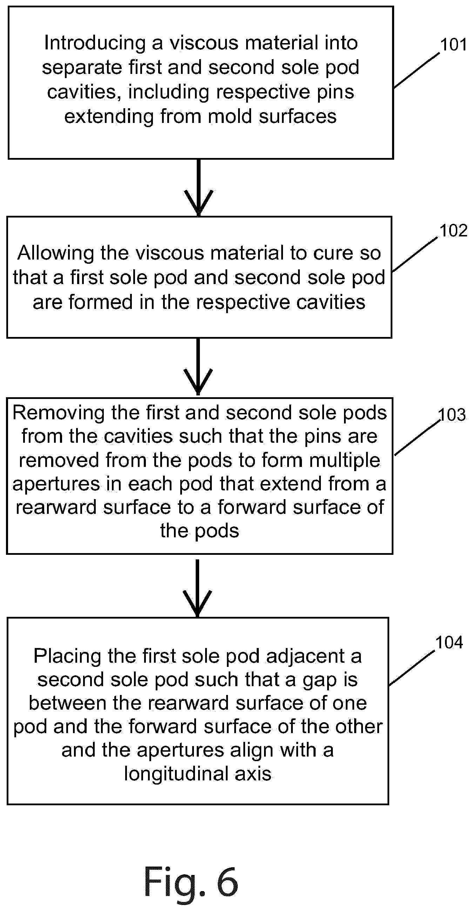

A method of manufacturing the footwear 10 and sole assembly 20 of the current embodiments will now be described in more detail. With reference to Fig. 6, the method can include a step 101 of introducing a viscous material into separate first and second sole pod cavities, including respective pins extending from mold surfaces. More particularly, the viscous material can be introduced into the cavities of the mold 90 shown in Fig. 5. The viscous material can be any type of flowable material, such as EVA foam, polyurethane, rubber or other materials. The viscous material can be introduced from a source 99 through one or more injection lines or ports 98, which are illustrated in a rudimentary form in Fig. 5. Alternatively, the viscous material can be poured individually into each of the respective cavities or otherwise added in some other manner to those cavities. Although shown with only a single part of the mold 90, that mold 90 alternatively can include a closure to close off the tops of the respective sole pod cavities.

With reference to Fig. 5, the mold 90 can include multiple sole pod cavities 91, 92, 93, 94, 95, 95H and 95T, which correspond to the corresponding sole pods 41, 42, 43, 44, 45, 45H and 45T of the sole assembly 20. Each of these individual sole pod cavities can be similar to one another, and can include components that are likewise similar to one another. Thus, only the first 91 and second 92 sole pod cavities will be described here. As shown in Fig. 5, the sole pod cavities can include a first mold surface 91S and 92S. These surfaces can be a bottom surface of a mold cavity. The mold cavities also can include sidewalls 91W and 92W, respectively, that surrounded the mold cavities.

The mold cavities can include pins extending from mold surfaces thereof. For example, the mold cavity 91 can include mold pins 91P extending upwardly from the mold surface 91S, into the cavity. Likewise, the mold cavity 92 can include mold pins 92P that extend upwardly from the bottom mold surface 92S. As described further below, these pins of the respective cavities can form the respective first apertures 61A and second apertures 62A of the respective first and second pods.

As also shown in Fig. 5, some of the mold cavities optionally may be void of upwardly extending pins that extend from a mold surface. For example the mold cavities 91T and 95H do not include any pins or are void of any pins therein. Thus, these will cavities can produce sole pods that are substantially solid, without the apertures and/or trusses of the other sole pods. This can be so that the respective heel and toe portions, which are subject to more wear during a natural gait cycle, can be more rigid than the other sole pods.

The method can include the step 102 of allowing the viscous material to cure so that a first sole pod and a second sole pod are formed in the respective cavities. For example, the viscous material introduced from a supply 99 through the injection lines 98 into the respective sole pod cavities of the mold 90 can be allowed to cure for a period of time after the introduction of the viscous material. During this time, the viscous material can set up and solidify. After it solidifies, the viscous material can become solid, so the respective sole pods are cured and ready for removal from the cavities. Generally in this cured state, each of the pods is solid, but optionally somewhat flexible. As the pods cure in the cavities, they still have the respective pins extending through them. For example, the pins 91P and 92P can extend through the curing or cured material making up the respective first pod 41 and second pod 42 formed in the first mold pod cavity 91 and the second pod cavity 92, respectively.

In addition, when the sole pods cure they also can form the respective first intermediate walls and second intermediate walls as described above, as well as the first truss 41T of the first sole pod and the second truss 42T of the second sole pod. When the pods are initially formed and cure, those trusses 41T and 42T can lay within a common plane CP. Where the mold 90 is oriented a horizontal configuration, that common plane CP can be a substantially horizontal plane. When the first sole pod and second sole pod cure in the respective pod cavities, those sole pods and the other sole pods can lay in a generally horizontal configuration. Optionally, where the mold 90 is in a vertical configuration, that common plane CP can be a vertical plane. When the first sole pod and the second sole pod cure in the respective pod cavities, those sole pods and the other sole pods can lay in a generally vertical configuration.

The method can include the step 103 of removing the sole pods from the respective sole pod cavities such that the pins are removed from the pods to form multiple apertures in each pod extend through a portion of the pods, for example, from a rear surface to a front surface of each pod. Where the pins 91P extend through the cured first pod 41, those pins can correspond to the first apertures 61A. Where the pins 92P extend through the cured second pod 42, those pins can correspond to the second apertures 62A. As mentioned above, the first apertures 61A can include first aperture axes 61AX, the second apertures can include second aperture axes 62AX. Thus, when a pod, for example, the formed pod 41 is pulled out of the corresponding mold pod cavity in step 103, the pins 91P can slide and move out of the material forming the first sole pod 41. As a result, the sole pod can define the aperture where the pins were once located. Although shown as fully open apertures, some of the apertures can be partially closed by excess material overlapping the apertures and pins during the molding process.

Optionally, before the sole pods are removed from the mold cavities, the cured pods can all lay within a common plane CP, similar to muffins or cookies laying in a muffin or cookie tin. In this configuration, the aperture axes 61AX of the first pod 41 and the aperture axes 62AX of the second pod 42 can extend orthogonally, out of the common plane CP. These first and second aperture axes can be offset from one another by a significantly greater distance than when the formed and cured pods 41 and 42 are placed adjacent one another in the sole assembly and attached to the base plate. For example, as shown in Fig. 5, the first aperture axis 61AX is offset from the second aperture axis 62AX by at least 25 mm before the first sole pod and the second sole pod are removed from the respective first pod cavity 91 and second pod cavity 92. Optionally, the first aperture axis 61AX and the second aperture axis 62AX can be offset by at least 30 mm, at least 40 mm, at least 50 mm or at least 60 mm before the first sole pod and the second sole pod are removed from the respective pod cavities. The first aperture axis and second aperture axis correspond to the first aperture and second aperture of the respective first and second sole pods that are closest to one another when the sole pods are joined to the base plate. For example, the offset is measured relative to the first apertures and second apertures that are located farthest to the medial side of the footwear to provide a simple reference. The offset is also measured relative to two adjacent pods, such as the first pod 41 and the second pod 42, or the fourth 44 and fifth 45 pods. In other cases, the offset distance can be measured between axes of the center most first apertures and center most second apertures. In still other cases, the offset distance can be measured between the axes of the lateral-most first apertures and lateral-most second apertures. Incidentally, the offset distance can be measured between the same axes and apertures when the sole pods are assembled to form part of the sole assembly. It also will be appreciated that before the pods are removed from the mold in step 103, the apertures and their respective axes cannot be aligned in parallel with a longitudinal axis of a sole assembly because that sole assembly does not yet exist.

The method can include placing the first sole pod 41 adjacent the second sole pod 42 such that a gap G1 is between the rear surface 41RS of the first sole pod and the front surface 42FS of the second sole pod, and such that the first apertures 61A align with the second apertures 62A and/or the longitudinal axis LA of the sole assembly 20. In this configuration, the first of second apertures, as well as the apertures of the other formed sole pods, where included in the sole assembly, generally align with the longitudinal axis LA as it extends from a forefoot region 12 toward a heel region 16 of the sole assembly.

During the placing step 104 or generally after the removing step 103, the first pod, second pod and the other pods and their components can be reoriented. For example, the first pod 41 and second pod 42 can be pulled upward, out of the mold 90 as shown in Fig. 5. Each of these pods 41 and 42 can be rotated upward, about respective axis A3 and A4 from the generally horizontal configuration, in which the pods 41 and 42 lay within common plane CP. As the pods are rotated, they can reorient from a horizontal configuration to a vertical configuration. The pods can then be reconfigured and arrange one in front of the other, rather than laying side by side in a common plane. When they are rearranged, the first rear surface 41RS can be placed across a gap G1 from the second forward surface 42FS. Likewise, the respective forward and rearward surfaces of the other pods can be correspondingly placed across from one another relative to the gaps G2, G3, G4 etc. Optionally, during this reorientation and reconfiguration, the front surfaces and rear surfaces of the respective pods can be reoriented from being generally parallel to one another and laying parallel to a common plane, to an orientation where the forward and rearward surfaces are aligned one in front of the other, from the forefoot region to the heel region, and orthogonal to the longitudinal axis LA of the sole assembly.

Further optionally, during the placing step, the respective trusses of the different sole pods are reoriented from their configuration while they were in the mold 90. For example, during the placing step, the first truss 41T can be placed in a first plane P1 and the second truss can be placed in a second plane P2. The first plane P1 and the second plane P2 can be separated by at least the first gap G1, and can be parallel with one another. The first plane and the second plane can have the first gap between them as they are separated. The other pods can likewise be oriented in similar planes that are also separated by the respective gaps.

When the sole pods are placed and reoriented, their respective axes also can be brought closer to one another and reoriented. For example, the first aperture axis 61AX can be moved closer to the second aperture action axis 62AX. As mentioned above, these axes can be brought closer to one another so that they are less than 25 mm apart. In some cases, these axes can be aligned with one another and parallel to the longitudinal axis LA. The respective apertures and associated tubular elements extending through the sole pods can also be reorient reoriented. For example, before the placing step, for example, while in the mold 90, all the tubes and apertures can lay side-by-side one another with the respective sole pods. After the placing step, the sole pods are reoriented such that the apertures and tubes of the respective pods lay one in front of or behind the other, as the respective sole pods are arranged in a particular order, from toe to heel, through the forefoot, arch and heel regions.

The placing step 104 can include placing the respective sole pods adjacent the base plate 30, and optionally within the respective recesses formed by the base plate to thereby establish the gaps between the sole pods. The sole pods can be secured to the base plate using any of the techniques mentioned above.

Optionally, the outsole tread can be joined with each of the respective sole pods before or after the placing step. For example, the outsole 50 can be joined with all of the outsole pods as a single unitary sheet or plate. In this construction, the outsole can extend over all of the sole pods and the respective gaps, thereby closing the gaps along the bottom portion thereof. In this construction, the sole pods can be joined with one another at their lower walls or lower portions with the connecting portion 51CP. As mentioned above, this connecting portion 51CP, however, can be cut or otherwise removed from between each of the respective sole pods to open up the respective gaps. As a result, each of the sole pods can be a cantilevered, independent structure that extends downwardly from the base plate, free to independently compress and/or expand relative to the other sole pods.

The various components and features of the embodiments herein, for example, the upper, sole or other footwear portions, can take on a variety of aesthetic forms, shapes and sizes. Although a particular component or feature can have a function, that feature can be expressed in different aesthetic manners to form an artistic design and/or purely ornamental design.

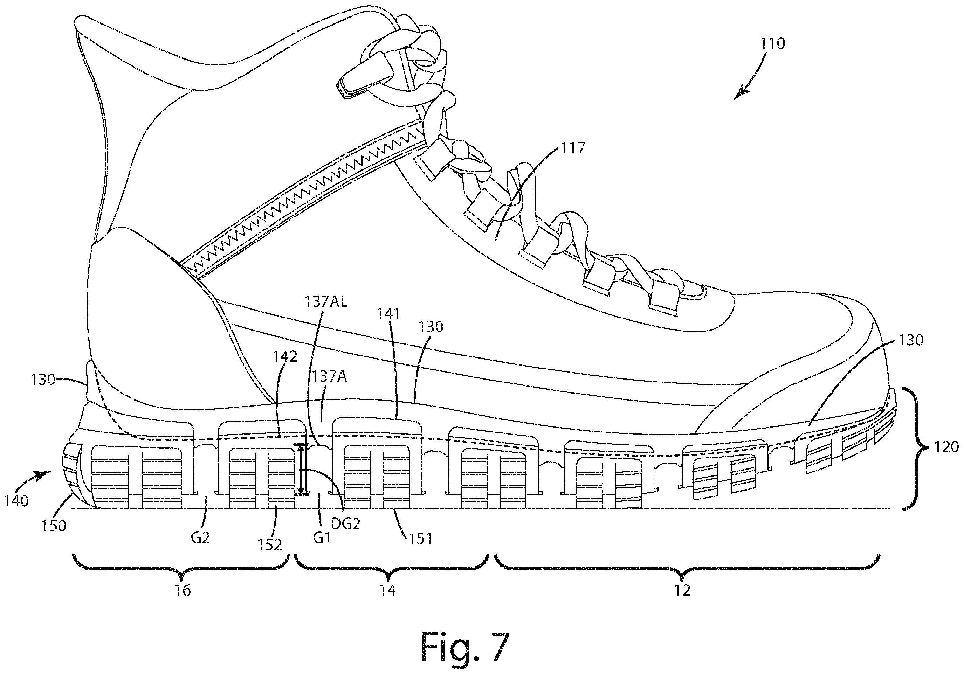

A first alternative embodiment of the footwear and the sole assembly is illustrated in Figs. 7-10. This embodiment can be similar in structure, function and operation to the embodiment described above with several exceptions. For example, the footwear 110 can include an upper 117 joined with a sole assembly 120. The sole assembly 120 can include a base plate 130 that is integrally formed with independent, cantilevered sole pods, for example first, second and third sole pods 141, 142 and 145H. The sole pods can be arranged one in front of the other, similar to the embodiment described above, with the second and third sole pods closer to the heel, or further into the heel region, than the first sole pod 141. Although shown as being located generally in the heel region, these pods also can be extended into the arch and/or forefoot region. Some of the other pods, for example, pods 145T, 144 and 145, can be constructed slightly different from the sole pods 141, 142, 143 and 145H. For example, the sole pods in the forefoot can be void of any apertures and respective trusses as described below, while the sole pods 141, 142, 143 and 145H can include such trusses. Of course, in other embodiments, the forefoot sole pods can include such apertures and trusses.

The sole assembly 120 can include an outsole 150. This outsole 150 can be virtually identical to the outsole described in connection with the embodiment above. It can include identical or similar features, such as ground contacting surfaces, outsole treads and sidewalls of the outsole, associated with the respective sole pods.

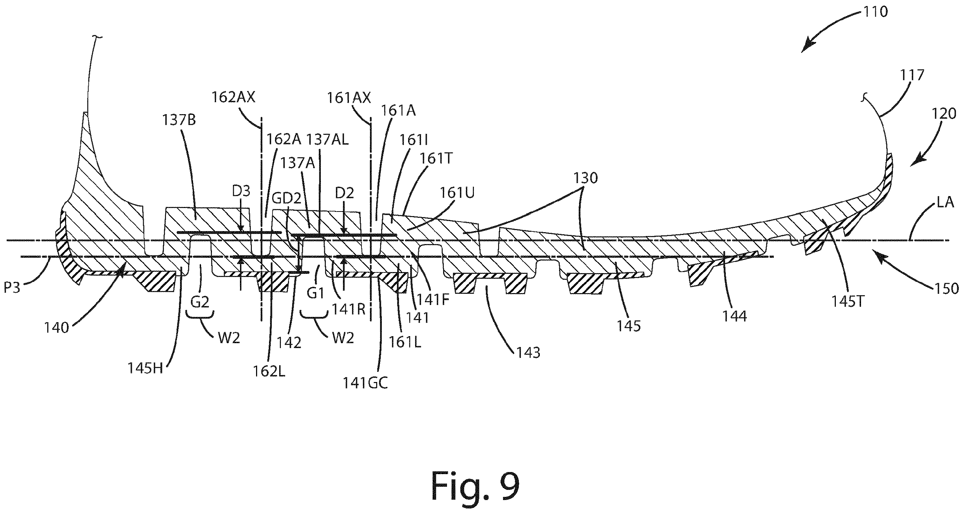

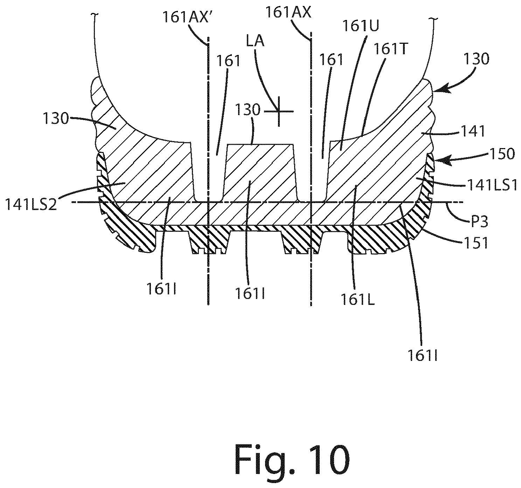

With reference to Figs. 9 and 10, each of the sole pods 140 can extend independently downward, in a cantilevered manner, from the base plate 30. Several of the sole pods and their relationship relative to one another and the sole assembly will be described here, noting that this description can apply to any of the other sole pods in any other regions of the sole assembly. In particular, the first 141 and second 142 sole pods will be described, noting that they both can include substantially identical features. The first and second sole pods can be integrally formed with the base plate. All of these components can be formed from a homogenous polymeric material, such as ethyl vinyl acetate (EVA), polyurethane (PU), latex, foam, a gel or other materials. The base plate 130 can include gap spacer blocks 137A, 137B, 137C, etc. These gap spacer blocks can be located between and can space the downwardly extending sole pods as described below. These gap spacer blocks optionally can be the same width as the gaps G1 and G2, and any other gaps between sole pods. For example, the gap G1 can be of a width W1 which corresponds to the width of spacer block 137A. The gap G2 can be of a width W2 which corresponds to the width of the spacer block 137B. The gap spacer blocks can be integrally formed with the base plate, which is optionally integrally formed with each of the respective sole pods. The gap spacer blocks can actually join adjacent sole pods, without necessarily spacing the sole pods from one another.

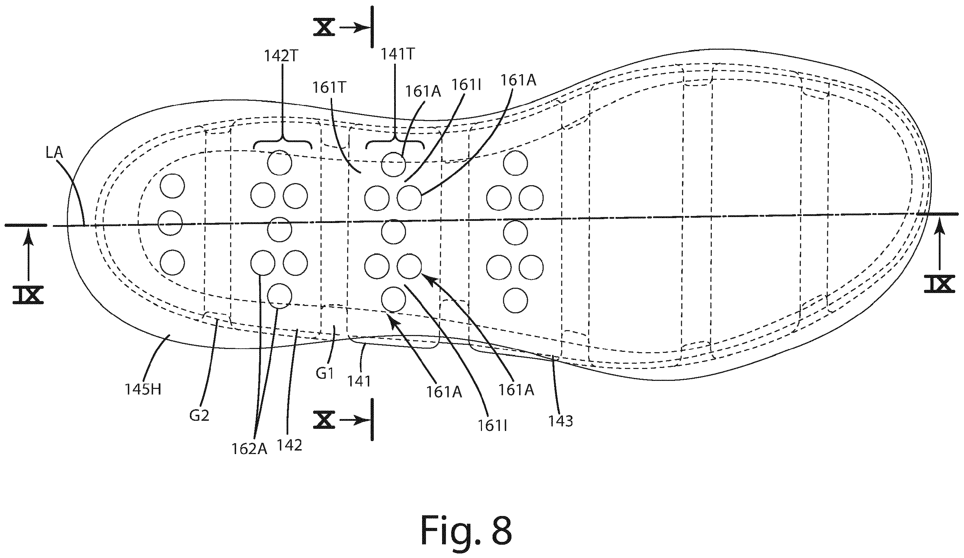

The first sole pod 141 can define a plurality of first apertures 161A. These apertures 161A can be transverse, to the longitudinal axis LA. The apertures optionally can be substantially perpendicular, for example, 80 to 100 degrees, inclusive, offset relative to the longitudinal axis LA. The first apertures can each include an aperture axis 161AX. This aperture axis 161AX can extend through the geometric center of each of the apertures. Where the apertures are irregularly shaped, the axis can extend generally through a center or other portion of the aperture, parallel to one or more of the sidewalls or intermediate walls of the aperture. As illustrated in Figs. 8, 9 and 10, each of the apertures 161A can be of a downward tapering cylindrical shape. For example, the apertures can be in the form of generally cylindrical tubes, bounded by the bottom wall and intermediate walls and/or front and rear walls and their respective surfaces of the respective sole pods. In other embodiments, the apertures can be of other geometric configurations. For example, they can be elliptical, polygonal, rounded, regular or other shapes forming corresponding tubes through the respective sole pods, through the base plate and its upper surface, down to a bottom wall of the sole pod, depending on the application.

The sole pod 141 can include a first upper portion 161U and a first lower wall 161L that are distal from one another. The upper portion 161U can transition to the base 130 and both can include a common upper surface or top surface 161T of the base plate. The lower wall 161L can be parallel to the base plate at the top of the sole pod and optionally parallel to the upper surface 161T. These upper and lower walls or portions can be connected via the sidewalls 141LS1 and 141LS2. The first apertures 161A can extend downward from the upper surface 161T and the upper portion 161U, to the first lower or bottom wall 161L. The apertures can include opening in the top surface that open upward, generally facing into the interior of the footwear. The apertures can extend vertically and transverse to the longitudinal axis LA as shown in Fig. 10. The first apertures can extend within the first sole pod between the first front surface or wall 141F and the first rear surface or wall 141R, as well as between the top surface 161T and the bottom wall 161L.

Optionally, the sole pod 141 can include multiple first intermediate wall members 1611 that extend downward from the upper portion and top surface toward the bottom wall. These intermediate wall members 1611 can be aligned such that they are substantially perpendicular to the longitudinal axis LA, and extend generally vertically. The respective first apertures 161A can be located between the respective ones of the first intermediate wall members 1611. Optionally, each of the first apertures can be bounded by one or more of the first bottom wall, the intermediate wall members, the front walls or surfaces 141F and rear walls or surfaces 141R, as well as the side walls in the sole pod 141. Optionally, with regard to the bottom wall, the outsole 50 can be joined directly to it, and one or more of the sidewalls 141LS 1 and 141LS2 of the sole pod. Each individual sole pod can include its own individual and separate outsole tread.

With further reference to Figs. 9 and 10, the intermediate walls 1611 between the respective first apertures can form a first truss 141T, which can be an integral truss within the sole pod 141. This truss 141T can lay within a first plane P3, which can be substantially perpendicular to the aperture axes 161AX or the apertures 161A in general. This first plane P3 can extend substantially horizontally through the sole assembly 120 from the heel to the toe. This first plane P3 also can extend through and intersect each sole pod and each truss, generally bisecting the sole pod and its truss into an upper portion and a lower portion, with the upper portion including the first upper portion 161U and the lower portion including the bottom wall 161L. The plane P3 also can intersect each of the intermediate walls 1611 of each truss. The first truss 141T, as well as the other trusses, for example the truss 142T of the second pod 142, can be configured to deform, with the respective apertures closing or changing in shape, and the bottom wall, sidewall and/or intermediate walls also deforming to change the shape of the respective apertures. Due to the forces of the weight of the wearer and the underfoot terrain, the terrain feature or underfoot feature can be absorbed into the sole pod, with the sole pod also providing cushioning in so doing.

Optionally, each of the respective sole pods can include apertures and trusses that are offset from one another. For example as shown in Fig. 9, the first sole pod 141 includes the first apertures 161A, having first aperture axes 161AX. The second sole pod 142 can include second apertures 162A having second aperture axes 162AX. The respective first and second apertures and their axes can be offset from one another. For example, the first apertures and axes can be offset forwardly relative to the second apertures and second axes. The first apertures and their axes can also be offset from the second apertures and their axes laterally relative to the longitudinal axis LA across the width of the sole assembly by different distances, depending on the number of apertures and the arrangement of apertures in each of the sole pods.

As shown in Figs. 7-9, the sole pods can be separated by one or more gaps G1, G2, G3, etc. Each of these gaps can extend upwardly from the lowermost part of the ground contacting surfaces of the respective adjacent sole pods to the base plate. For example, the gap G1 can extend upward from the ground contacting surface 141GC of the sole pod 141, which also can form the lowermost part of the outsole tread 151, toward the base plate 130. Where the base plate 130 includes a gap spacer block 137A, that gap G1 can extend upward to the lower surface 137AL of the gap spacer block 137, which also can be referred to as the upper or top surface of the gap G1, as it forms the uppermost boundary of that gap G1. As shown, this gap can thus extend above the bottom wall 161A1 of the adjacent sole pods 141 and 142.

Optionally, the gaps between the sole pods can have relationships with components of the sole pods. For example, the first apertures 161A and second apertures 162A can include respective bottoms the 161L and 162L. These bottoms can lay within a common plane that extends through the bottom walls, and optionally through bottom wall surfaces that form the uppermost portion of those bottom walls. As mentioned above, the gap G1 can terminate at the lower surface 137AL of the gap spacer block 137A. This lower surface can also be referred to as a gap top surface 137AL. This gap top surface can be disposed a distance D2 above the bottom wall surface of the bottom wall 161L of the sole pod 141. This gap top surface 137AL also can be disposed a distance D3 above a bottom wall surface of the bottom wall 162L of the sole pod 142. Optionally, the bottom wall surfaces of the respective first 161A and/or second 162A apertures can be disposed below the gap top surface 137AL, and in other cases can sometimes be disposed in a common plane or otherwise at the same level. The first and second distances, also referred to as the gap top surface to bottom wall offset distances (where the bottom walls and gap top surfaces are not in the same plane or at the same level), can have a particular relationship relative to the gap depth GD2 of the gap between adjacent sole pods. For example, the gap depth GD2 can be expressed in a ratio relative to the offset distance of a particular sole pod. For example, the ratio of GD2 to D2 or D3 can optionally be 1.5:1, 2:1, 3:1, 4:1 or other values depending on the depth of the apertures, the truss structure and the depth of the gaps. It will be appreciated that the respective other gaps and apertures of the other sole pods can have similar relationships.

Directional terms, such as "vertical," "horizontal," "top," "bottom," "upper," "lower," "inner," "inwardly," "outer" and "outwardly," are used to assist in describing the invention based on the orientation of the embodiments shown in the illustrations. The use of directional terms should not be interpreted to limit the invention to any specific orientation(s).

The above description is that of current embodiments of the invention. Various alterations and changes can be made without departing from the spirit and broader aspects of the invention as defined in the appended claims, which are to be interpreted in accordance with the principles of patent law including the doctrine of equivalents. This disclosure is presented for illustrative purposes and should not be interpreted as an exhaustive description of all embodiments of the invention or to limit the scope of the claims to the specific elements illustrated or described in connection with these embodiments. For example, and without limitation, any individual element(s) of the described invention may be replaced by alternative elements that provide substantially similar functionality or otherwise provide adequate operation. This includes, for example, presently known alternative elements, such as those that might be currently known to one skilled in the art, and alternative elements that may be developed in the future, such as those that one skilled in the art might, upon development, recognize as an alternative. Further, the disclosed embodiments include a plurality of features that are described in concert and that might cooperatively provide a collection of benefits. The present invention is not limited to only those embodiments that include all of these features or that provide all of the stated benefits, except to the extent otherwise expressly set forth in the issued claims. Any reference to claim elements in the singular, for example, using the articles "a," "an," "the" or "said," is not to be construed as limiting the element to the singular. Any reference to claim elements as "at least one of X, Y and Z" is meant to include any one of X, Y or Z individually, and any combination of X, Y and Z, for example, X, Y, Z; X, Y; X, Z ; and Y, Z.

The present disclosure extends to the following statements:
S1. A sole assembly for an article of footwear comprising:
   a base plate extending longitudinally from a forefoot region toward a heel region, the base plate configured for attachment to an upper, the base plate including a longitudinal axis extending from the forefoot region toward the heel region;
   a first sole pod disposed under the base plate and in the forefoot region, the first sole pod including a first front surface, a first rear surface, a first lateral surface and a first medial surface, the first sole pod defining a plurality of first apertures extending through the first sole pod between the first front surface and the first rear surface, the first apertures each being substantially parallel to the longitudinal axis, the first sole pod including a first lower ground contacting surface;
   a second sole pod disposed under the base plate, the second sole pod including a second front surface, a second rear surface, a second lateral surface and a second medial surface, the second sole pod defining a plurality of second apertures extending through the second sole pod between the second front surface and the second rear surface, the second apertures each being substantially parallel to the longitudinal axis, the second sole pod including a second lower ground contacting surface, the second sole pod being closer to the heel region than the first sole pod; and
   a third sole pod disposed under the base plate and in the forefoot region, the third sole pod including a third front surface, a third rear surface, a third lateral surface and a third medial surface, the third sole pod defining a plurality of third apertures extending through the third sole pod between the third front surface and the third rear surface, the third apertures each being substantially parallel to the longitudinal axis, the third sole pod including a third lower ground contacting surface, the third sole pod being closer to the heel region than the second sole pod,
   wherein the first rear surface is separated from the second front surface by a first gap that extends upwardly from the first ground contacting surface and the second ground contacting surface to the base plate,
   wherein the second rear surface is separated from the third front surface by a second gap that extends upwardly from the second ground contacting surface and the third ground contacting surface to the base plate.
S2. The sole assembly of statement S1,
   wherein the first rear surface defines a first rear surface plane,
   wherein the second front surface defines a second front surface plane,
   wherein the first plurality of apertures are substantially orthogonal to the first rear surface plane,
   wherein the second plurality of apertures are substantially orthogonal to the second front surface plane.
S3. The sole assembly of statement S2 (or statement S1 or S2),
   wherein at least one of the first plurality of apertures is aligned with at least one of the second plurality of apertures.
S4. The sole assembly of statement S1 (or any of statements S1 to S3),
   wherein the first rear surface and the second front surface are substantially planar and parallel to one another,
   wherein the second rear surface and the third front surface are substantially planar and parallel to one another.
S5. The sole assembly of statement S1 (or any of statements S1 to S4),
   wherein each of the plurality of first apertures is in the form of a first polygonal tube including a first bottom,
   wherein each of the plurality of second apertures is in the form of a second polygonal tube including a second bottom,
   wherein the first bottom and the second bottom lay in a common plane,
   wherein the common plane is interrupted by the first gap disposed between the first sole pod and the second sole pod.
S6. The sole assembly of statement S5 (or any of statements S1 to S5),
   wherein the first lateral surface and the first medial surface are closed and void of any opening,
   wherein the second lateral surface and the second medial surface are closed and void of any opening.
S7. The sole assembly of statement S1 (or any of statements S1 to S6),
   wherein the first sole pod includes a first upper wall and a first lower wall,
   wherein a plurality of first intermediate wall members extend from the first upper wall to the first lower wall, the plurality of first intermediate wall members being substantially parallel to the longitudinal axis,
   wherein the plurality of first apertures are located between respective ones of the first upper wall, the first lower wall and the plurality of first intermediate wall members,
   wherein the first plurality of apertures and second plurality of apertures are noncontinuous with one another, the first gap being interposed between the first apertures and the second apertures.
S8. The sole assembly of statement S1 (or any of statements S1 to S7),
   wherein at least one of the first apertures and at least one of the second apertures are aligned with one another such that the third sole pod can be viewed through along a line extending through the at least one of the first apertures and the at least one of the second apertures.
S9. The sole assembly of statement S1 (or any of statements S1 to S8),
   wherein the first sole pod includes a first bottom wall,
   wherein a first outsole tread is joined with the first bottom wall, the first outsole tread including the first ground contacting surface,
   wherein the second sole pod includes a second bottom wall,
   wherein a second outsole tread is joined with the second bottom wall, the second outsole tread including the first ground contacting surface,
   wherein the first outsole tread includes a first cut portion facing toward the second outsole tread,
   wherein the second outsole tread includes a second cut portion facing toward the first outsole tread,
   wherein the first cut portion and the second cut portion were previously joined via a connector tread portion that extended between the first cut portion and the second cut portion, below the base plate.
S10. The sole assembly of statement S1 (or any of statements S1 to S9),
   wherein each of the first plurality of apertures includes a first aperture axis extending through the first aperture and parallel to the longitudinal axis,
   wherein each of the second plurality of apertures includes a second aperture axis extending through the second aperture and parallel to the longitudinal axis,
   wherein the first aperture axis is parallel to the second aperture axis.
S11. A sole assembly for an article of footwear comprising:
   a base plate extending longitudinally from a forefoot region toward a heel region, the base plate configured for attachment to an upper, the base plate including a longitudinal axis extending from the forefoot region toward the heel region;
   a first sole pod extending under the base plate, the first sole pod including a first front surface, a first rear surface, a first lateral surface and a first medial surface, the first sole pod defining a plurality of first apertures extending within the first sole pod between the first front surface and the first rear surface, the first sole pod including a first lower ground contacting surface;
   a second sole pod extending under the base plate, the second sole pod including a second front surface, a second rear surface, a second lateral surface and a second medial surface, the second sole pod defining a plurality of second apertures extending within the second sole pod between the second front surface and the second rear surface, the second sole pod including a second lower ground contacting surface, the second sole pod being farther rearward relative to the longitudinal axis than the first sole pod;
   wherein the first rear surface is separated from the second front surface by a first gap that extends upwardly from the first ground contacting surface and the second ground contacting surface to the base plate,
   wherein the first sole pod and the second sole pod extend downward from the base plate in a cantilevered manner,
   wherein the first sole pod and the second sole pod are independently compressible,
   whereby an underfoot terrain feature can be absorbed into at least one of the first sole pod and the second sole pod.
S12. The sole assembly of statement S11,
   wherein the first sole pod includes a first upper wall and a first lower wall,
   wherein a plurality of first intermediate wall members extend from the first upper wall to the first lower wall, the plurality of first intermediate wall members being substantially parallel to the longitudinal axis,
   wherein the plurality of first apertures are located between respective ones of the first upper wall, the first lower wall and the plurality of first intermediate wall members,
   wherein the plurality of first apertures and the plurality of second apertures terminate short of a toe and short of a heel of the base plate, such that the plurality of first apertures and plurality of second apertures do not extend a full length of the sole assembly.
S13. The sole assembly of statement S11 (or statement S11 or S12),
   wherein the first sole pod includes a first bottom wall,
   wherein a first outsole tread is joined with the first bottom wall, the first outsole tread including the first ground contacting surface,
   wherein the second sole pod includes a second bottom wall,
   wherein a second outsole tread is joined with the second bottom wall, the second outsole tread including the first ground contacting surface,
   wherein the base plate includes a top surface,
   wherein the first apertures extend downward from the top surface to a first bottom wall,
   wherein the second apertures extend downward from the top surface to a second bottom wall,
   wherein the first apertures are separated by first intermediate walls,
   wherein the second apertures are separated by second intermediate walls.
S14. The sole assembly of statement S13 (or any of statements S11 to S13),
   wherein the first apertures and first intermediate walls form a first truss,
   wherein the second apertures and second intermediate walls form a second truss,
   wherein the first truss and the second truss lay in a substantially horizontal plane.
S15. The sole assembly of statement S11 (or any of statements S11 to S14),
   wherein the first sole pod includes a plurality of first intermediate wall members arranged to form a first truss between a first upper wall of the first sole pod and a first bottom wall of the first sole pod, with the first plurality of apertures formed among the plurality of first intermediate wall members and extending from the first front surface to the first rear surface.
S16. A method of manufacturing a sole assembly for footwear, the method comprising:
   introducing a viscous material into a first sole pod cavity, the first sole pod cavity including a plurality of first pins extending from a first mold surface of the first sole pod cavity;
   introducing the viscous material into a second sole pod cavity, the second sole pod cavity including a plurality of second pins extending from a second mold surface of the second sole pod cavity;
   allowing the viscous material to cure such that a first sole pod is formed in the first sole pod cavity and a second sole pod is formed in the second sole pod cavity;
   removing the first sole pod from the first sole pod cavity such that the first pins are removed from the first sole pod to expose a plurality of first apertures that extend between a first rear surface and a first front surface of the first sole pod;
   removing the second sole pod from the second sole pod cavity such that the second pins are removed from the second sole pod to expose a plurality of second apertures that extend between a second rear surface and a second front surface of the second sole pod;
   placing the first sole pod adjacent the second sole pod such that a gap is between the first rear surface and the second front surface and such that the plurality of first apertures and plurality of second apertures substantially align with a longitudinal axis that is configured to extend from a forefoot region to a heel region of a sole assembly.
S17. The method of statement S16, comprising:
   forming a plurality of first intermediate walls between ones of the plurality of first apertures to form a first truss; and
   forming a plurality of second intermediate walls between ones of the plurality of second apertures to form a second truss, the second truss and the first truss laying substantially in a common plane before the placing step,
   wherein during the placing step, the first truss is placed in a first plane and the second truss is placed in a second plane, with the first plane and the second plane being separated from one another and substantially parallel to one another.
S18. The method of statement S16 (or statement S16 or S17),
   wherein at least one of the plurality of first apertures includes a first aperture axis,
   wherein at least one of the plurality of second apertures includes a second aperture axis,
   wherein the first aperture axis is offset from the second aperture axis by at least 25 mm before the first sole pod and the second sole pod are removed from the respective first pod cavity and second pod cavity,
   wherein the first aperture axis is offset from the second aperture axis by less than 25 mm after the placing step.
S19. The method of statement S16 (or any of statements S16 to S18),
   wherein at least one of the plurality of first apertures includes a first aperture axis,
   wherein at least one of the plurality of second apertures includes a second aperture axis,
   wherein the first aperture axis and the second aperture axis are moved closer to one another during the placing step.
S20. The method of statement S19 (or any of statements S16 to S19),
   wherein the first sole pod and the second sole pod cure in the respective first sole pod cavity and the second sole pod cavity, with the first sole pod and the second sole pod laying in a substantially horizontal configuration,
   wherein the first sole pod and the second sole pod are each rotated upward about a respective first axis and second axis to a substantially vertical configuration, such that the first rear surface can be placed across the gap from the second front surface.

## Claims

1. A sole assembly for an article of footwear comprising:
a base plate extending longitudinally from a forefoot region toward a heel region, the base plate configured for attachment to an upper, the base plate including a longitudinal axis extending from the forefoot region toward the heel region;
a first sole pod extending under the base plate, the first sole pod including a first front surface, a first rear surface, a first lateral surface and a first medial surface, the first sole pod defining a plurality of first apertures extending within the first sole pod between the first front surface and the first rear surface, the first sole pod including a first lower ground contacting surface;
a second sole pod extending under the base plate, the second sole pod including a second front surface, a second rear surface, a second lateral surface and a second medial surface, the second sole pod defining a plurality of second apertures extending within the second sole pod between the second front surface and the second rear surface, the second sole pod including a second lower ground contacting surface, the second sole pod being farther rearward relative to the longitudinal axis than the first sole pod;
wherein the first rear surface is separated from the second front surface by a first gap that extends upwardly from the first ground contacting surface and the second ground contacting surface to the base plate,
wherein the first sole pod and the second sole pod extend downward from the base plate in a cantilevered manner,
wherein the first sole pod and the second sole pod are independently compressible,
whereby an underfoot terrain feature can be absorbed into at least one of the first sole pod and the second sole pod.

2. The sole assembly of claim 1,
wherein the first sole pod includes a first upper wall and a first lower wall,
wherein a plurality of first intermediate wall members extend from the first upper wall to the first lower wall, the plurality of first intermediate wall members being substantially parallel to the longitudinal axis,
wherein the plurality of first apertures are located between respective ones of the first upper wall, the first lower wall and the plurality of first intermediate wall members,
wherein the plurality of first apertures and the plurality of second apertures terminate short of a toe and short of a heel of the base plate, such that the plurality of first apertures and plurality of second apertures do not extend a full length of the sole assembly.

3. The sole assembly of claim 1 or 2,
wherein the first sole pod includes a first bottom wall,
wherein a first outsole tread is joined with the first bottom wall, the first outsole tread including the first ground contacting surface,
wherein the second sole pod includes a second bottom wall,
wherein a second outsole tread is joined with the second bottom wall, the second outsole tread including the first ground contacting surface,
wherein the base plate includes a top surface,
wherein the first apertures extend downward from the top surface to a first bottom wall,
wherein the second apertures extend downward from the top surface to a second bottom wall,
wherein the first apertures are separated by first intermediate walls,
wherein the second apertures are separated by second intermediate walls, optionally wherein:
the first apertures and first intermediate walls form a first truss;
the second apertures and second intermediate walls form a second truss; and
the first truss and the second truss lay in a substantially horizontal plane.

4. The sole assembly of any of the preceding claims,
wherein the first sole pod includes a plurality of first intermediate wall members arranged to form a first truss between a first upper wall of the first sole pod and a first bottom wall of the first sole pod, with the first plurality of apertures formed among the plurality of first intermediate wall members and extending from the first front surface to the first rear surface.

5. A method of manufacturing a sole assembly for footwear, the method comprising:
introducing a viscous material into a first sole pod cavity, the first sole pod cavity including a plurality of first pins extending from a first mold surface of the first sole pod cavity;
introducing the viscous material into a second sole pod cavity, the second sole pod cavity including a plurality of second pins extending from a second mold surface of the second sole pod cavity;
allowing the viscous material to cure such that a first sole pod is formed in the first sole pod cavity and a second sole pod is formed in the second sole pod cavity;
removing the first sole pod from the first sole pod cavity such that the first pins are removed from the first sole pod to expose a plurality of first apertures that extend between a first rear surface and a first front surface of the first sole pod;
removing the second sole pod from the second sole pod cavity such that the second pins are removed from the second sole pod to expose a plurality of second apertures that extend between a second rear surface and a second front surface of the second sole pod;
placing the first sole pod adjacent the second sole pod such that a gap is between the first rear surface and the second front surface and such that the plurality of first apertures and plurality of second apertures substantially align with a longitudinal axis that is configured to extend from a forefoot region to a heel region of a sole assembly.

6. The method of claim 5, comprising:
forming a plurality of first intermediate walls between ones of the plurality of first apertures to form a first truss; and
forming a plurality of second intermediate walls between ones of the plurality of second apertures to form a second truss, the second truss and the first truss laying substantially in a common plane before the placing step,
wherein during the placing step, the first truss is placed in a first plane and the second truss is placed in a second plane, with the first plane and the second plane being separated from one another and substantially parallel to one another.

7. The method of claim 5 or 6, wherein:
at least one of the plurality of first apertures includes a first aperture axis; and
at least one of the plurality of second apertures includes a second aperture axis,
and wherein:
the first aperture axis is offset from the second aperture axis by at least 25 mm before the first sole pod and the second sole pod are removed from the respective first pod cavity and second pod cavity, wherein the first aperture axis is offset from the second aperture axis by less than 25 mm after the placing step; or
the first aperture axis and the second aperture axis are moved closer to one another during the placing step, optionally wherein the first sole pod and the second sole pod cure in the respective first sole pod cavity and the second sole pod cavity, with the first sole pod and the second sole pod laying in a substantially horizontal configuration, and optionally wherein the first sole pod and the second sole pod are each rotated upward about a respective first axis and second axis to a substantially vertical configuration, such that the first rear surface can be placed across the gap from the second front surface.

8. A sole assembly for an article of footwear comprising:
a base plate extending longitudinally from a forefoot region toward a heel region, the base plate configured for attachment to an upper, the base plate including a longitudinal axis extending from the forefoot region toward the heel region;
a first sole pod disposed under the base plate and in the forefoot region, the first sole pod including a first front surface, a first rear surface, a first lateral surface and a first medial surface, the first sole pod defining a plurality of first apertures extending through the first sole pod between the first front surface and the first rear surface, the first apertures each being substantially parallel to the longitudinal axis, the first sole pod including a first lower ground contacting surface;
a second sole pod disposed under the base plate, the second sole pod including a second front surface, a second rear surface, a second lateral surface and a second medial surface, the second sole pod defining a plurality of second apertures extending through the second sole pod between the second front surface and the second rear surface, the second apertures each being substantially parallel to the longitudinal axis, the second sole pod including a second lower ground contacting surface, the second sole pod being closer to the heel region than the first sole pod; and
a third sole pod disposed under the base plate and in the forefoot region, the third sole pod including a third front surface, a third rear surface, a third lateral surface and a third medial surface, the third sole pod defining a plurality of third apertures extending through the third sole pod between the third front surface and the third rear surface, the third apertures each being substantially parallel to the longitudinal axis, the third sole pod including a third lower ground contacting surface, the third sole pod being closer to the heel region than the second sole pod,
wherein the first rear surface is separated from the second front surface by a first gap that extends upwardly from the first ground contacting surface and the second ground contacting surface to the base plate,
wherein the second rear surface is separated from the third front surface by a second gap that extends upwardly from the second ground contacting surface and the third ground contacting surface to the base plate.

9. The sole assembly of claim 8,
wherein the first rear surface defines a first rear surface plane,
wherein the second front surface defines a second front surface plane,
wherein the first plurality of apertures are substantially orthogonal to the first rear surface plane,
wherein the second plurality of apertures are substantially orthogonal to the second front surface plane,
optionally wherein at least one of the first plurality of apertures is aligned with at least one of the second plurality of apertures.

10. The sole assembly of claim 8 or 9,
wherein the first rear surface and the second front surface are substantially planar and parallel to one another,
wherein the second rear surface and the third front surface are substantially planar and parallel to one another.

11. The sole assembly of any of claims 8 to 10,
wherein each of the plurality of first apertures is in the form of a first polygonal tube including a first bottom,
wherein each of the plurality of second apertures is in the form of a second polygonal tube including a second bottom,
wherein the first bottom and the second bottom lay in a common plane,
wherein the common plane is interrupted by the first gap disposed between the first sole pod and the second sole pod,
optionally wherein:
the first lateral surface and the first medial surface are closed and void of any opening; and
the second lateral surface and the second medial surface are closed and void of any opening.

12. The sole assembly of any of claims 8 to 11,
wherein the first sole pod includes a first upper wall and a first lower wall,
wherein a plurality of first intermediate wall members extend from the first upper wall to the first lower wall, the plurality of first intermediate wall members being substantially parallel to the longitudinal axis,
wherein the plurality of first apertures are located between respective ones of the first upper wall, the first lower wall and the plurality of first intermediate wall members,
wherein the first plurality of apertures and second plurality of apertures are noncontinuous with one another, the first gap being interposed between the first apertures and the second apertures.

13. The sole assembly of any of claims 8 to 12,
wherein at least one of the first apertures and at least one of the second apertures are aligned with one another such that the third sole pod can be viewed through along a line extending through the at least one of the first apertures and the at least one of the second apertures.

14. The sole assembly of any of claims 8 to 13,
wherein the first sole pod includes a first bottom wall,
wherein a first outsole tread is joined with the first bottom wall, the first outsole tread including the first ground contacting surface,
wherein the second sole pod includes a second bottom wall,
wherein a second outsole tread is joined with the second bottom wall, the second outsole tread including the first ground contacting surface,
wherein the first outsole tread includes a first cut portion facing toward the second outsole tread,
wherein the second outsole tread includes a second cut portion facing toward the first outsole tread,
wherein the first cut portion and the second cut portion were previously joined via a connector tread portion that extended between the first cut portion and the second cut portion, below the base plate.

15. The sole assembly of any of claims 8 to 14,
wherein each of the first plurality of apertures includes a first aperture axis extending through the first aperture and parallel to the longitudinal axis,
wherein each of the second plurality of apertures includes a second aperture axis extending through the second aperture and parallel to the longitudinal axis,
wherein the first aperture axis is parallel to the second aperture axis.
